(19) Europäisches Patentamt
European Patent Office
Office européen des brevets

(11) EP 4 787 651 A1

(12) EUROPEAN PATENT APPLICATION
published in accordance with Art. 153(4) EPC

(43) Date of publication:
**05.08.2026 Bulletin 2026/32**

(21) Application number: **24872156.5**

(22) Date of filing: **24.09.2024**

(51) International Patent Classification (IPC):
***H02J 3/14*** *(2026.01)* ***E02F 9/00*** *(2006.01)*
***H02J 3/32*** *(2026.01)* ***H02J 13/00*** *(2026.01)*

(52) Cooperative Patent Classification (CPC):
**E02F 9/00; H02J 3/14; H02J 3/32; H02J 13/00**

(86) International application number:
**PCT/JP2024/033879**

(87) International publication number:
**WO 2025/070365 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.09.2023 JP 2023170963**

(71) Applicant: **Hitachi Construction Machinery Co., Ltd.**
**Tokyo 110-0015 (JP)**

(72) Inventors:
- **TOKIYOSHI, Ryo**
  **Tsuchiura-shi, Ibaraki 300-0013 (JP)**
- **NIIDOME, Takashi**
  **Tsuchiura-shi, Ibaraki 300-0013 (JP)**
- **KURAMOCHI, Kazuyoshi**
  **Tsuchiura-shi, Ibaraki 300-0013 (JP)**
- **TSUMURA, Hiroshi**
  **Tsuchiura-shi, Ibaraki 300-0013 (JP)**
- **ONO, Kuniyuki**
  **Tsuchiura-shi, Ibaraki 300-0013 (JP)**
- **HOTTA, Kaito**
  **Tsuchiura-shi, Ibaraki 300-0013 (JP)**

(74) Representative: **MERH-IP Matias Erny Reichl Hoffmann**
**Patentanwälte PartG mbB**
**Paul-Heyse-Straße 29**
**80336 München (DE)**

# (54) WORK MACHINE, ELECTRIC POWER CONTROL METHOD, AND ELECTRIC POWER CONTROL SYSTEM

(57) The work machine such as the electric excavator 100 of the present invention includes a vehicle body with a working device, an AC/DC converter 111 installed on the vehicle body to receive power from the grid power supply 400, and a high voltage battery 112 attached to the vehicle body, and operates by power received from the grid power supply 400 and the high voltage battery 112 through the AC/DC converter 111. Furthermore, the work machine includes a first data transmission/reception 125 that receives information output by an external device, the server 500, and a vehicle controller 120 that sets the power received from the grid power supply 400 based on the information received by the first data transmission/-reception 125. This provides a work machine, electric power control method, and electric power control system that can more appropriately distribute the power obtained from the grid power supply to the work machine, achieving both a reduction in the load on the grid power supply and improved work efficiency at the work site.

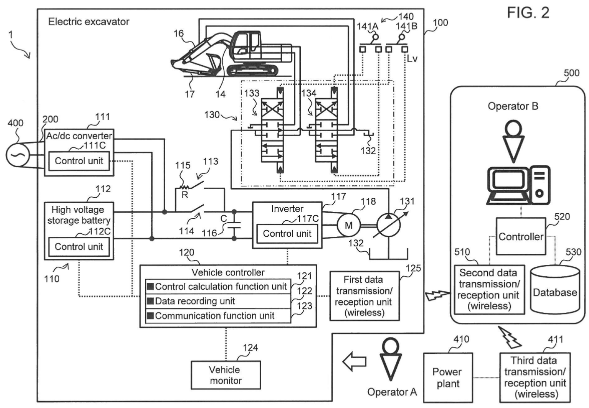


FIG. 2

EP 4 787 651 A1

## Description

### Technical Field

The present invention relates to a work machine, an electric power control method, and an electric power control system. In particular, the present invention relates to a work machine that operates on both grid power supply and battery power, and an electric power control method and system that can be preferably applied to this work machine.

### Background Art

Recently, from the perspective of environmental consideration, work machines that operate on electric power are being used. As a method of supplying power to work machines, there are systems that supply both grid power supply and battery power.

Patent Document 1 discloses an electric construction machine that controls the power consumption of an electric motor so as not to exceed the allowable power described later. Specifically, the controller mounted on the electric construction machine calculates its own required power to drive a plurality of hydraulic actuators based on the operation signals of the plurality of operation devices, and calculates the allowable power as a power limit value available to the electric motor based on its own required power, the required power of other electric construction machines received via a communication device, and the allowable electric power of the commercial power receiving equipment.

### Prior Art Documents

### Patent Documents

Patent Document 1: JP 2020-39239 A

### Summary of the Invention

### Problems to be Solved by the Invention

However, there is an upper limit to the power that can be received from the grid power supply. On the other hand, the power required within a work site sharing the grid power supply changes from time to time depending on the operating status and number of electric products such as work machines operating at the work site. Additionally, there may be requests from the electric power company to reduce power usage depending on the overall power supply and demand situation of the power infrastructure. Therefore, it is necessary to achieve both a reduction in the load on the grid power supply and the efficiency of work within the work site. That is, it is necessary to more appropriately distribute the power that can be used by work machines according to the upper limit of power receivable from the grid power supply and requests for power reduction from the electric power company. The purpose of the present invention is to provide a work machine, an electric power control method, and an electric power control system that can achieve both a reduction in the load on the grid power supply and efficiency within the work site.

### Means for Solving the Problems

To solve the above problems, the work machine of the present invention includes: a vehicle body including a work device; a power receiving means attached to the vehicle body to receive electric power from a grid power supply; and a battery attached to the vehicle body, and the work machine operates using electric power from the power receiving device and the battery. The work machine includes a control means for setting electric power received from the grid power supply based on information output by an external device installed outside the work machine. In this case, the power obtained from the grid power supply can be more appropriately distributed to the work machine, thereby achieving both a reduction in the load on the grid power supply and efficiency within the work site.

Here, the work machine of the present invention includes a data transmission/reception unit that transmits vehicle body information to an external device and receives information output from the external device. The data transmission/reception unit transmits information on the power consumed by the vehicle body to the external device as vehicle body information, and receives new power information calculated by the external device based on the power consumed by the vehicle body over a predetermined period from the present time. The control means can set the power received from the grid power supply based on the new power information determined by the external device received by the data transmission/reception unit. In this case, the power received from the grid power supply can be set according to the power most recently used by the device. Also, the predetermined period can be set excluding the period during which the device is stopped. In this case, the power most recently used by the device can be calculated more accurately.

The present invention also provides an electric power control method includes: by a processor configured to execute a program recorded in memory, setting the electric power received from a grid power supply for a work machine that operates using electric power from the grid power supply and the battery, based on signals output by an external device. In this case, it is possible to provide an electric power control method that can be preferably applied to a work machine that can achieve both a reduction in the load on the grid power supply and efficiency within the work site.

Furthermore, the present invention provides an electric power control system comprising: a plurality of work machines that operate on power from the grid power supply and battery power; a management device that determines the power to be distributed to each work machine from the power received from the grid power supply based on the total consumption electric power consumption when the plurality of work machines are operating; and a controller that sets the power received by the work machines from the grid power supply to the distribution electric power determined by the management device. In this case, it is possible to provide an electric power control system that can be preferably applied to a work machine that can achieve both a reduction in the load on the grid power supply and efficiency within the work site.

## Advantages of the Invention

According to the present invention, the power obtained from the grid power supply can be more appropriately distributed to the work machine. This makes it possible to provide a work machine, an electric power control method, and an electric power control system that can achieve both a reduction in the load on the grid power supply and efficiency within the work site.

## Brief Description of the Drawings

[FIG. 1] is a block diagram showing the overall configuration of a work site to which the present embodiment is applied.
[FIG. 2] is a diagram showing the power control system of the present embodiment.
[FIG. 3] is a flowchart showing a case where an operator sets the power received from the grid power supply during the operation of an electric excavator.
[FIG. 4] is a sequence diagram showing the data exchange between the vehicle controller, controller, and database.
[FIG. 5] is a flowchart showing a case where a server calculates and sets the power received from the grid power supply during the operation of an electric excavator.
[FIG. 6] is a sequence diagram showing the data exchange between the vehicle controller, controller, and database.
[FIG. 7] is a flowchart showing a case where a server calculates and sets the power received from the grid power supply during the operation of an electric excavator.
[FIG. 8] is a sequence diagram showing the data exchange between the power plant, vehicle controller, controller, and database.
[FIG. 9] (a) to (b) are diagrams explaining the recent predetermined time.
[FIG. 10] (a) to (e) are diagrams showing the transition of the power state (mode) of the electric excavator.
[FIG. 11] (a) is a diagram explaining the case of changing the power received from the grid power supply. (b) to (d) are diagrams showing the change in peak power when the power supply is changed.
[FIG. 12] is a diagram showing a specific example of distributing the power received from the grid power supply to the plurality of electric excavators.

## Modes for Carrying the Invention

The embodiments of the present invention will be described in detail below with reference to the accompanying drawings.

### <Description of the Overall Configuration of the Work Site>

FIG. 1 is a block diagram showing the overall configuration of a work site to which the present embodiment is applied. The plurality of work machines operate at the work site. The work site shown is a construction site. It shows a case where an electric excavator 100 operates as a work machine at the construction site. The work machines operating at the construction site are not limited to the electric excavator 100 and can include construction machines such as wheel loaders, bulldozers, and crane trucks. Additionally, the work machines operating at the construction site may include trucks 190 that transport gravel and the like. The work site is not limited to construction sites. For example, it can also be an agricultural work site where agricultural machines operate as work machines. In this case, the agricultural machines include felling machines, logging machines, tractors, forest work vehicles, and yarders. FIG. 1 shows a case where the operation information of various work machines is aggregated to a server 500 via wireless communication, etc., for information management for operation, inspection, and maintenance.

The electric excavator 100 shown is an example of a work machine that operates on power from the grid power supply and battery power. It can also be said that the electric excavator 100 is an example of an electric construction machine. The electric excavator 100 is connected to an electric power cable 200 that supplies power to the electric excavator 100. The electric power cable 200 is, for example, a high voltage cable capable of transmitting three-phase alternating current. Both ends of the electric power cable 200 are connected to the electric excavator 100 and the reel-type cable container 300, and power is supplied to the electric excavator 100 via the reel-type cable container 300. The reel-type cable container 300 has the electric power cable 200 wound around an unillustrated cable reel housed in the container, and the electric power cable 200 is fed out from the cable reel toward the electric excavator 100.

The reel-type cable container 300 is supplied with power from the grid power supply 400. The grid power supply 400, also known as commercial power, is generated by the power plant 410 and supplied by the power company. FIG. 1 shows that power is supplied from two grid power supplies 400.

The power from the grid power supply 400 has a limit on the amount that can be used, as determined by contracts and other agreements. The power limit is, for example, 88VA. Therefore, even when operating the plurality of work machines, the total power used cannot exceed this limit. Battery-powered work machines that operate solely on battery power need to receive power from the grid power supply during charging, and if multiple rapid charges are concentrated during break times, there is a risk of overloading the grid power supply or hindering rapid charging operations due to power usage constraints. Furthermore, cable-operated work machines that operate solely on grid power supply may experience issues with machine operation or normal grid power supply operation if power demands based on machine output fluctuations exceed the available power. Therefore, in this embodiment, it is configured to allow the use of the battery power installed in the device while receiving electric power from the grid power supply. Then, by individually setting the upper limit of usable power for each piece of machinery according to the conditions of the work site, a battery-cable hybrid type of machinery is adopted that achieves both a reduction in the load on the grid power supply and a response to the power demands of the machinery.

However, the power required within a work site sharing a grid power supply changes from time to time depending on the operating status and number of electric products such as work machines operating at the site. Additionally, there may be requests from the power company to reduce power usage based on the overall power supply and demand situation of the power infrastructure. In such cases, a method of setting a fixed limit on the power received from the grid power supply for each work machine is not sufficient to achieve a balance between reducing the load on the grid power supply and responding to the power demands of the work machines. Therefore, in this embodiment, a method is adopted to change the power received from the grid power supply for each work machine based on the operating status of the work machines, at least during their operation, to solve this problem.

<Description of the Configuration of Electric Power Control System 1>

FIG. 2 shows the electric power control system 1 of this embodiment. The electric power control system 1 shown in FIG. 2 indicates that power is supplied to the electric excavator 100 via the electric power cable 200 from the grid power supply 400. In the following description, for simplicity, the case where the work machine is the electric excavator 100 is explained, but it is of course applicable to work machines other than the electric excavator 100.

The electric excavator 100 is equipped with a high voltage circuit 110, a vehicle controller 120, a hydraulic circuit 130, and an operation system 140. External devices include the power plant 410, the third data transmission/reception unit 411 of the power plant 410, and the server 500. In the illustrated electric excavator 100, the vehicle controller 120 controls the power supplied from the electric power cable 200 and the high voltage circuit 110 to drive the drive motor 118, which is the power source. The high voltage circuit 110 is an example of a power receiving device that receives power from the grid power supply 400, and includes an AC/DC converter 111 that converts the AC power supplied from the electric power cable 200 into DC power, a high voltage storage battery 112 that stores power as an example of a battery, a pre-charge relay 113 and a main relay 114 that control the ON/OFF of the high voltage circuit 110, a resistor 115, a capacitor 116, an inverter 117 that converts DC power into AC power to drive the drive motor 118, and the drive motor 118.

When turning ON the high voltage circuit 110, first turn ON the pre-charge relay 113. This allows the capacitor 116 to accumulate charge. Then, turn ON the main relay 114. This avoids the occurrence of inrush current when turning ON the high voltage circuit 110. It also avoids the occurrence of welding at the terminals of the high voltage circuit 110. In the high voltage circuit 110, the drive motor 118 is driven by the power generated by the AC/DC converter 111 and the high voltage storage battery 112. In other words, when the load on the drive motor 118 is small, the drive motor 118 is driven by the power from the AC/DC converter 111. At this time, if there is surplus power supplied from the AC/DC converter 111, the high voltage storage battery 112 is charged. On the other hand, when the load on the drive motor 118 increases and the power from the AC/DC converter 111 is insufficient, the shortfall is supplied from the high voltage storage battery 112. The power supplied from the AC/DC converter 111 and the high voltage storage battery 112 is stabilized into DC by the capacitor 116. Then, the inverter 117 converts the DC into any frequency or AC, controlling the rotation speed of the drive motor 118. This controls the hydraulic pressure generated by the hydraulic pump 131 driven by the drive motor 118, operating the electric excavator 100.

The vehicle controller 120 sets the power received from the grid power supply 400 based on information output by the server 500, which is an external device installed outside the electric excavator 100. In other words, the vehicle controller 120 sets the power received from the grid power supply 400 according to the power determined by the server 500. Furthermore, it can be said that the vehicle controller 120 sets the power received by the electric excavator 100 from the grid power supply 400 based on the distribution electric power determined by the server 500. Then, the power received from the grid power supply 400 (the upper limit of received power) is adjusted by the AC/DC converter 111. For example, by adjusting the resistance value within the current limiting circuit of the AC/DC converter 111, the power received from the grid power supply 400 can be adjusted. The vehicle controller 120 includes a control calculation function unit 121, a data recording unit (memory) 122, and a communication function unit 123. The control calculation function unit 121 performs calculations to control the AC/DC converter 111, the high voltage storage battery 112, and the inverter 117. The AC/DC converter 111, high voltage storage battery 112, and inverter 117 are each equipped with control units (controllers) 111C, 112C, and 117C. The control units 111C, 112C, and 117C send data representing the state of the AC/DC converter 111, high voltage storage battery 112, and inverter 117 to the control calculation function unit 121. The control calculation function unit 121 performs calculations based on the transmitted data and sends control signals to control the AC/DC converter 111, high voltage storage battery 112, and inverter 117 to the control units 111C, 112C, and 117C. When adjusting the power received from the grid power supply 400, the vehicle controller 120 sends a command, and the control unit 111C of the AC/DC converter 111 receives the command. As a result, the settings of the AC/DC converter 111 change, and the power received from the grid power supply 400 is altered. The data recording unit (memory) 122 records program data for the control calculation function unit 121 to perform calculations. The communication function unit 123 is a communication interface used to send control signals to the control units 111C, 112C, and 117C. Additionally, the vehicle controller 120 is connected to a vehicle monitor 124 and a first data transmission/reception unit 125. The vehicle monitor 124 can display the status of the electric excavator 100. The vehicle monitor 124 is, for example, a touch panel, and the operator can input settings and other information about the electric excavator 100 using the vehicle monitor 124. The first data transmission/reception unit 125 is an example of a first data communication device that receives information output by the server 500, which is an external device, and is a communication interface for communicating with the server 500. The vehicle controller 120 sets the power received from the grid power supply 400 based on the information received by the first data transmission/reception unit 125.

The hydraulic circuit 130 includes a hydraulic pump 131 that generates hydraulic pressure, a hydraulic fluid tank 132 that stores hydraulic fluid, a first directional control valve 133, and a second directional control valve 134. The hydraulic pump 131 is a variable displacement hydraulic pump driven by a drive motor 118. This hydraulic pump 131 draws hydraulic fluid from the hydraulic fluid tank 132 and supplies it through the first directional control valve 133 and the second directional control valve 134 to the swing motor (not shown), boom cylinder 14, arm cylinder 16, and bucket cylinder 17 of the electric excavator 100, thereby operating the electric excavator 100. Hereinafter, if the boom cylinder 14, arm cylinder 16, and bucket cylinder 17 are not distinguished individually, they may simply be referred to as hydraulic cylinders 14, 16, 17. The hydraulic cylinders 14, 16, 17, as well as the boom, arm, and bucket (not shown), are examples of work equipment.

The operation system 140 is installed in the operating room of the electric excavator 100 and is used by the operator when operating the electric excavator 100. The operation system 140 includes a work mode selection switch, a motor control dial (not shown) for setting the rotational speed of the drive motor 118, and control levers 141A, 141B, among others. The control levers 141A, 141B correspond to each swing motor and hydraulic cylinders 14, 16, 17, and, for example, electric levers that output electrical operation signals (lever signals Lv) according to the amount of operation are used.

The server 500 is an example of a management device that determines a plurality of distribution electric powers to distribute the power received from the grid power supply 400 to the plurality of electric excavators 100 based on the total consumption electric power when the work machine is operating. The server 500 is an external device and is a server computer that manages the entire electric power control system 1. The server 500 can be, for example, a cloud server operating on the cloud. The server 500 includes a second data transmission/reception unit 510, a controller 520, and a database 530. The second data transmission/reception unit 510 is a communication interface for exchanging data such as power with the electric excavator 100. In this case, the second data transmission/reception 510 communicates with the first data transmission/reception 125 connected to the vehicle controller 120 of the electric excavator 100. The controller 520 communicates with the plurality of electric excavators 100 and obtains the power used by each electric excavator 100. Then, the power received by each electric excavator 100 from the grid power supply 400 is determined. As will be described in detail later, as a first method for determining power, based on the obtained power, the operator B determines the power received by each electric excavator 100 from the grid power supply 400. The operator B is, for example, the administrator of the electric power control system 1. As a second method for determining power, based on the obtained power, the controller 520 determines the power received by each electric excavator 100 from the grid power supply 400 using a predetermined calculation method. The determined power is sent to each electric excavator 100 via the second data transmission/reception 510. The database 530 stores the history of the obtained power.

The third data transmission/reception 411 of the power plant 410, as will be described in detail later, sends the allowable electric power value of the grid power supply 400 to the server 500.

<Description of the processing performed by the electric power control system 1>

FIG. 3 to 8 are flowcharts and sequence diagrams showing the processing performed by the electric power control system 1. Among them, FIG. 3 is a flowchart showing the case where the operator B sets the power (hereinafter sometimes referred to as ""allowable electric power value"") received from the grid power supply 400 during the operation of the electric excavator 100 (hereinafter sometimes referred to as ""vehicle body""). In this case, the vehicle body, which is the electric excavator 100, includes structures and drive devices, and constitutes the work machine. First, the operator B manually inputs the allowable electric power value (S301). For example, the operator B monitors the power used by the plurality of electric excavators 100 (vehicle bodies) and sets the allowable electric power value based on their work conditions. For example, if a certain electric excavator 100 is performing a task with a large load and using a large amount of power, the allowable electric power value for that electric excavator 100 is increased. Conversely, if a certain electric excavator 100 is performing a task with a small load and using a small amount of power, the allowable electric power value for that electric excavator 100 is reduced. As a result, the operator B distributes the power received from the grid power supply 400 according to the power usage conditions of each electric excavator 100 while adhering to the upper limit of the grid power supply 400 used. Next, the controller 520 recognizes the allowable electric power value (S302). Furthermore, the controller 520 sends the allowable electric power value to the second data transmission/reception 510 (S303). Then, the second data transmission/reception 510 wirelessly sends data to the first data transmission/reception 125 of the vehicle body (S304). In the electric excavator 100, the first data transmission/reception 125 of the vehicle body receives the allowable electric power value data from the second data transmission/reception 510 of the server 500 (S305). Next, the first data transmission/reception 125 of the vehicle body sends the allowable electric power value data to the vehicle controller 120 (S306). Furthermore, the vehicle controller 120 sends the allowable electric power value data to the AC/DC converter 111 (S307). Then, the hardware of the AC/DC converter 111 performs power conversion according to the allowable electric power value (S308).

FIG. 4 is a sequence diagram showing the data exchange between the vehicle controller 120, the controller 520, and the database 530. When the operator B manually inputs the allowable electric power value, the vehicle controller 120 needs to grasp the power usage conditions of the plurality of electric excavators 100. Therefore, each vehicle controller 120 of the the plurality of electric excavators 100 sends the consumption electric power data to the controller 520 (S401). The controller 520 sends the consumption electric power data to the database 530 and stores the data (S402). Additionally, the controller 520 retrieves the consumption electric power data within a predetermined time from the database 530 (S403). Upon seeing this, the operator B manually inputs the allowable electric power value (S404). This corresponds to S301 in FIG. 3. The controller 520 sends the allowable electric power value data to the vehicle controller 120 (S405). This corresponds to S304 in FIG. 3. The vehicle controller 120 changes the allowable electric power value (S406). This corresponds to S307 in FIG. 3.

According to the method of FIG. 3 to 4, the power received from the grid power supply 400 is determined by the server 500, which is an external device, and the vehicle controller 120 obtains the power from the server 500 via communication. At this time, the power received from the grid power supply 400 is determined by the operator B, who is the administrator, based on the power used by the plurality of work machines, including the vehicle body. At this time, the operator B distributes power to the plurality of electric excavators 100 within the range that does not exceed the upper limit of the power that can be obtained from the grid power supply 400 (in this case, the contract electric power value). This allows the operator B to manually set the power received by the electric excavator 100 from the grid power supply 400 during the operation of the electric excavator 100.

FIG. 5 is a flowchart showing the case where the server 500 calculates and sets the power received from the grid power supply 400 during the operation of the electric excavator 100. First, the control unit 117C of the inverter 117 sends the key ON/OFF information and consumption electric power data to the vehicle controller 120 (S501). Next, the first data transmission/reception 125 of the vehicle body wirelessly sends this information to the second data transmission/reception 510 of the server 500 (S502).

In the server 500, the second data transmission/reception 510 sends data to the controller 520 (S503). Next, the controller 520 sends data to the database 530 (S504). At this time, the database 530 receives data from the controller 520 and stores the data (S505). Furthermore, the controller 520 calculates the allowable electric power value from the power consumed by the electric excavator 100 during a predetermined time while the key is ON and the power is received from the controller 520 (S506). Then, the controller 520 sends the allowable electric power value to the second data transmission/reception 510 (S507). The second data transmission/reception 510 wirelessly sends data to the first data transmission/reception 125 of the vehicle body (S508).

The first data transmission/reception unit 125 of the vehicle body receives the allowable electric power value from the second data transmission/reception unit 510 of the server 500 (S509). The first data transmission/reception unit 125 of the vehicle body transmits the allowable electric power value to the vehicle controller 120 (S510). Then, the vehicle controller 120 receives the allowable electric power value (S511). Next, the vehicle controller 120 transmits the allowable electric power value to the AC/DC converter 111 (S512). Then, the hardware of the AC/DC converter 111 converts the power according to the allowable electric power value (S513).

FIG. 6 is a sequence diagram showing the data exchange between the vehicle controller 120, the controller 520, and the database 530. First, the consumption electric power data of the electric excavator 100 is transmitted to the controller 520 (S601). This corresponds to S502 in FIG. 5. The controller 520 transmits the consumption electric power data to the database 530 and stores the data (S602). This corresponds to S504-S505 in FIG. 5. Additionally, the controller 520 retrieves the consumption electric power data within a predetermined time from the database 530 (S603), and calculates the allowable electric power value based on the retrieved consumption electric power data (S604). This corresponds to S506 in FIG. 5. The controller 520 transmits the allowable electric power value to the vehicle controller 120 (S605). This corresponds to S508 in FIG. 5. The vehicle controller 120 changes the allowable electric power value (S606). This corresponds to S512 in FIG. 5.

According to the methods in FIGS. 5 to 6, the power received from the grid power supply 400 is determined by the external device, server 500, and the vehicle controller 120 obtains the power from the server 500 via communication. At this time, the power received from the grid power supply 400 is calculated by the server 500, which is an external device, based on the power used by the electric excavator 100, which is the device itself, over a predetermined period of time counted back from the present. In this case, the server 500 calculates the power received from the grid power supply 400 based on the power used by the self-device during its operation, without considering the power of other electric excavators 100. As a result, the power received from the grid power supply 400 calculated by the server 500 can be automatically set by the vehicle controller 120 during the operation of the electric excavator 100. In this case, the first data transmission/-reception unit 125 transmits the consumption electric power information, which is the information of the power consumed by the vehicle body, to the server 500, and receives the new electric power information determined by the server 500 based on the consumption electric power information. It can also be said that the vehicle controller 120 sets the power received from the grid power supply 400 based on the new electric power information determined by the server 500 received by the first data transmission/reception unit 125.

FIG. 7 is also a flowchart showing the case where the server 500 calculates and sets the power received from the grid power supply 400 during the operation of the electric excavator 100. However, compared to the case in FIG. 5, the method of calculating the power received from the grid power supply 400 is different. First, the control unit 117C of each inverter 117 of the plurality of electric excavators 100 (vehicle bodies) transmits the key ON/OFF information and consumption electric power data to the vehicle controller 120 (S701). Meanwhile, the control unit 112C of each high voltage storage battery 112 of the plurality of vehicle bodies transmits the SOC (State Of Charge) data to the vehicle controller 120 (S702). Next, the first data transmission/reception unit 125 of the vehicle body wirelessly transmits this information to the second data transmission/reception unit 510 of the server 500 (S703).

In the server 500, the second data transmission/reception unit 510 transmits data to the controller 520 (S704). Meanwhile, the second data transmission/reception unit 510 in the server 500 receives the allowable electric power value of the grid power supply 400 within the construction site from the power plant 410 and transmits the value to the controller 520 (S705). Next, the controller 520 further transmits the data sent in S704 and S705 to the database 530 (S706). The database 530 receives data from the controller 520 and stores the data (S707). Furthermore, the controller 520 calculates the distribution electric power required for each vehicle body as the allowable electric power value from the recent key ON/OFF, consumption electric power, SOC, and contract electric power value of the grid power supply 400 (S708). Then, the controller 520 transmits the allowable electric power value to the second data transmission/reception unit 510 (S709). Furthermore, the second data transmission/reception unit 510 wirelessly transmits the distribution electric power required for each vehicle body to the first data transmission/reception unit 125 of each vehicle body (S710).

The first data transmission/reception unit 125 of each vehicle body receives the allowable electric power value from the second data transmission/reception unit 510 of the server 500 (S711). The first data transmission/reception unit 125 of the vehicle body transmits the allowable electric power value to the vehicle controller 120 (S712). Then, the vehicle controller 120 receives the allowable electric power value (S713). Next, the vehicle controller 120 transmits the allowable electric power value to the AC/DC converter 111 (S714). Then, the hardware of the AC/DC converter 111 converts the power according to the allowable electric power value (S715).

In the case of FIG. 7, the first data transmission/reception unit 125 transmits information about the vehicle body's key ON/OFF status to the server 500. Then, the server 500 receives new electric power information determined based on the information about the electric power consumed during the period when the vehicle body is operational, which is determined from the consumption electric power information (in this case, the consumption electric power data) and the key ON/OFF information. Additionally, the first data transmission/reception unit 125 transmits the battery remaining information, which is the information of the remaining amount of the high voltage storage battery 112 (in this case, SOC data), to the server 500, and receives the new electric power information determined by the server 500 based on the consumption electric power information and the battery remaining information.

On the other hand, the server 500 receives the plurality of consumption electric power information, which is the information of the power consumed by the vehicle bodies of the plurality of electric excavators 100, and the contract electric power value, which is the power obtainable from the grid power supply 400. Then, based on the plurality of consumption electric power information, the total consumption electric power is determined, and based on the total consumption electric power, the plurality of consumption electric power information, and the contract electric power value, the plurality of distribution electric powers are determined for each electric excavator 100 such that the total of the distribution electric powers does not exceed the contract electric power value. Then, the information of the determined the plurality of distribution electric powers is transmitted to each of the the plurality of electric excavators 100.

FIG. 8 is a sequence diagram showing the data exchange between the power plant 410, the vehicle controller 120, the controller 520, and the database 530. First, each vehicle controller 120 of the plurality of electric excavators 100 transmits consumption electric power data, etc., to the controller 520 (S801). This corresponds to S703 in FIG. 7. In the power plant 410, the contract electric power value is transmitted to the controller 520 (S802). This corresponds to S705 in FIG. 7. The controller 520 transmits the consumption electric power data and the contract electric power value to the database 530 and stores the data (S803). This corresponds to S706-S707 in FIG. 7. Additionally, the controller 520 retrieves the consumption electric power data of the plurality of electric excavators 100 from the database 530 (S804), and calculates the allowable electric power value based on the retrieved consumption electric power data (S805). This corresponds to S708 in FIG. 7. The controller 520 transmits the allowable electric power value to the vehicle controller 120 (S806). This corresponds to S710 in FIG. 7. The vehicle controller 120 changes the allowable electric power value (S807). This corresponds to S714 in FIG. 7.

According to the methods in FIGS. 7 to 8, the power received from the grid power supply 400 is determined by the external device, server 500, and the vehicle controller 120 obtains this power from the server 500 via communication. At this time, the power received from the grid power supply 400 is calculated by the external device, server 500, based on the power used by the plurality of electric excavators 100, including the self-device electric excavator 100. In this case, the server 500 considers not only the consumption electric power of the self-device but also that of other electric excavators 100. Then, the server 500 calculates the distribution of power received from the grid power supply 400 based on the consumption electric power used by the plurality of electric excavators 100 during the operation of the self-device. At this time, the external device, server 500, distributes power to the plurality of electric excavators 100 within the range that does not exceed the upper limit of the power obtainable from the grid power supply 400 (in this case, the contract electric power value). As a result, the vehicle controller 120 can automatically set the power received from the grid power supply 400 calculated by the server 500 during the operation of the electric excavator 100.

<Description of the Most Recent Specified Time>

In FIG. 5, the controller 520 calculates the allowable electric power value from the power consumed by the electric excavator 100 during the most recent key ON period for a specified time, and the method for determining this most recent specified time will be explained next. FIGS. 9(a) to (b) are diagrams explaining the most recent specified time. In this embodiment, the most recent specified time is a predetermined period counted back from the current time. FIG. 9(a) shows the case where this period can be continuously obtained. In other words, during the predetermined period $\Delta t$ counted back from the current time, the electric excavator 100 is in key ON, i.e., operating, so the consumption electric power can be obtained. FIG. 9(b) shows the case where this period cannot be continuously obtained. In other words, during the predetermined period $\Delta t$ counted back from the current time, there is a key OFF period of the electric excavator 100, meaning the electric excavator 100 is stopped, so the consumption electric power cannot be obtained. In this case, the time is further traced back to obtain the consumption electric power during the key ON period, ensuring that the total time equals the predetermined period $\Delta t$. In FIG. 9(b), the predetermined period is set so that the sum of the operating periods $\Delta t1$ and $\Delta t2$ equals $\Delta t$ ($\Delta t1+\Delta t2=\Delta t$). In other words, the predetermined period $\Delta t$ is defined excluding the periods when the device is stopped. Alternatively, if there is a stopped period within the predetermined period $\Delta t$, a predetermined initial value may be adopted.

<Description of Operating and Stopped States>

In this embodiment, whether the electric excavator 100 is operating or stopped is defined as follows. FIG. 10(a) to (e) show the transitions of the power state (mode) of the electric excavator 100. Here, the transitions of the power state (mode) of the electric excavator 100 when switching from key OFF to key ON and back to key OFF are shown. FIG. 10(a) shows the power state when the key of the electric excavator 100 is removed and it is in key OFF. At this time, both the low voltage circuit and the high voltage circuit 110 (see FIG. 2) are off. FIG. 10(b) shows the power state when the key is inserted into the electric excavator 100 and the ACC (accessory) is turned ON. At this time, the low voltage circuit is turned on, but the high voltage circuit 110 remains off. In this power state, the vehicle controller 120, vehicle monitor 124, and first data transmission/reception 125 of the electric excavator 100 can operate, but the hydraulic circuit 130 cannot be operated, and the arm of the electric excavator 100 cannot be moved. FIG. 10(c) shows the power state when the main relay 114 of the high voltage circuit 110 (see FIG. 2) is turned ON. At this time, both the low voltage circuit and the high voltage circuit 110 are turned on. In this power state, the hydraulic circuit 130 of the electric excavator 100 can be operated, and the arm of the electric excavator 100 can be moved. FIG. 10(d) shows the power state when the main relay 114 of the high voltage circuit 110 is turned OFF. At this time, the power state is the same as in FIG. 10(b), where the low voltage circuit is on, but the high voltage circuit 110 is off. FIG. 10(e) shows the power state when the key is removed from the electric excavator 100 and it is turned to key OFF. At this time, the power state is the same as in FIG. 10(a), where both the low voltage circuit and the high voltage circuit 110 are off.

In this embodiment, the electric excavator 100 is considered to be operating in the state shown in FIG. 10(c). In other words, it refers to the time when both the low voltage circuit and the high voltage circuit 110 are on. On the other hand, in this embodiment, the electric excavator 100 is considered to be stopped in the states shown in FIGS. 10(a) to (b) and (d) to (e). In other words, it refers to the time when the high voltage circuit 110 is off.

<Explanation of Effects>

Next, the effects of this embodiment will be explained. As explained above, in this embodiment, the vehicle controller 120 changes the power received from the grid power supply 400. The timing of the change can be either while the electric excavator 100 is operating or stopped. Therefore, even when stopped, the power received from the grid power supply 400 can be changed by a signal from the server 500. That is, as long as it can be received on the side of the electric excavator 100, it can be done at any time. When making changes while stopped, such as during nighttime or breaks when the battery level is less likely to fluctuate, optimal electric power distribution can be performed from outside the electric excavator 100 (without boarding to drive the electric excavator 100) by considering the battery level, enabling charge management within the work site.

FIG. 11(a) is a diagram explaining the case of changing the power received from the grid power supply 400. In FIG. 11(a), the horizontal axis represents time, and the vertical axis represents the consumption electric power of the electric excavator 100. In the figure, the dotted line L indicates the power received from the grid power supply 400. And when the consumption electric power of the electric excavator 100 is below the dotted line L, the electric excavator 100 is operated by the power from the grid power supply 400. Also, at this time, the surplus power from the grid power supply 400 is used to charge the high voltage storage battery 112, which is the battery. On the other hand, when the consumption electric power of the electric excavator 100 exceeds the dotted line L, the shortage is supplemented from the high voltage storage battery 112, and the electric excavator 100 is operated by the power from both the grid power supply 400 and the high voltage storage battery 112. And in this embodiment, the power received from the grid power supply 400 is changed by the method described above. This corresponds to moving the dotted line L up and down in FIG. 11(a). Even if the power received during the operation of the electric excavator 100 is changed and reduced, the shortage is supplemented from the high voltage storage battery 112, so there is no impact on the operation of the electric excavator 100 or the operator's operability.

This allows for the leveling of peak power regarding the power received from the grid power supply 400. FIGS. 11(b) to (d) show the changes in peak power when the power supply is changed. Among these, FIG. 11(b) shows the case where the electric excavator 100 is operated solely by the battery. In this case, when operating the electric excavator 100, the power received from the grid power supply 400 is 0. However, for example, it is necessary to charge the battery with power from the grid power supply 400 during lunch breaks. In this case, since charging needs to be done in a short time, the peak power becomes high.

FIG. 11(c) shows the case where the electric excavator 100 is operated solely by the power from the grid power supply 400. And compared to the case in FIG. 11(a), since the power from the grid power supply 400 is received over a longer time, when considering receiving the same amount of power as in FIG. 11(a), the power received from the grid power supply 400 is leveled, and the peak power becomes smaller. However, the power required to operate the electric excavator 100 increases or decreases depending on the content of the work, so the power received from the grid power supply 400 increases or decreases as shown. Therefore, the peak power does not become significantly smaller, and the leveling of power is not sufficient. Note that the amount of power corresponds to the area of the gray-shaded portion.

FIG. 11(d) shows the case of this embodiment, where the electric excavator 100 is operated by power from both the grid power supply 400 and the battery. In this case, the presence of the battery further smooths the power received from the grid power supply 400 compared to FIG. 11(c), and the peak power becomes even smaller.

If the peak power received from the grid power supply 400 can be smoothed, the power received from the grid power supply 400 can be further smoothed. In this case, the power received from the grid power supply 400 can be distributed more efficiently according to the power demands of each electric excavator 100. In this embodiment, the server 500 determines the power received from the grid power supply 400 for each electric excavator 100. In this case, the power received from the grid power supply 400 can be determined according to the power demands of the plurality of electric excavators 100. Therefore, the power received from the grid power supply 400 can be distributed more efficiently. Thus, even if there is an upper limit on the contract electric power or similar for the grid power supply 400, that power can be utilized more effectively. As a result, it is possible to achieve both a reduction in the load on the grid power supply 400 and a response to the power demands of the electric excavator 100.

<Example>

In FIG. 7, an actual example of distributing power received from the grid power supply 400 to the plurality of electric excavators 100 is described. FIG. 12 is a diagram showing a specific example of distributing power received from the grid power supply 400 to the plurality of electric excavators 100. Here, the distribution amount of power received from the grid power supply 400 is determined based on the ratio of the remaining operation time calculated from the average past consumption electric power and remaining SOC of each electric excavator 100. Here, the case of distributing power received from the grid power supply 400 to four electric excavators A to D is described. The average past consumption electric power of electric excavator A can be determined by the following equation 1. Also, the distribution amount of power received by electric excavator A from the grid power supply 400 can be determined by the following equation 2. The same method can be applied to determine the values for electric excavators B to D.

[Equation 1]

$$h_A[h] = \frac{SOC_A}{P_A^{ave}} \quad \cdots \quad \text{(Formula 1)}$$

[Equation 2]

$$P_A[kW] = P_{lim} \times \frac{1}{n-1} \times \frac{h_{All} - h_A}{h_{All}} \quad \cdots \quad \text{(Formula 2)}$$

In equations 1 and 2, hA to hD are the remaining operation times [h] of electric excavators A to D, hAll is the total remaining operation time [h] obtained by summing hA to hD, SOCA is the remaining battery capacity [kWh] of electric excavator A, PAave is the average consumption electric power [kW] of electric excavator A, Plim is the contract electric power [kW] of the grid power supply 400, PA is the power [kW] distributed to electric excavator A, and n is the number of electric excavators.

When the remaining operation times [h], SOC, and battery capacities of electric excavators A to D are as shown, equation 1 gives the remaining operation times hA to hD as 3h, 2h, 2h, and 6h, respectively. From this, the ratio of the remaining operation times hA to hD for electric excavators A to D is A:B:C:D=3h:2h:2h:6h, resulting in a distribution ratio of 10:11:11:7. When the contract electric power of the grid power supply 400 is set to 88VA, the power distribution to electric excavators A to D, based on this, becomes A:B:C:D=22kW:25kW:25kW:16kW.

<Description of Electric Power Control Method>

The processing performed by the vehicle controller 120 in the embodiment described above is realized through the cooperation of software and hardware. That is, a processor such as a CPU (Central Processing Unit) not shown, attached to the vehicle controller 120, loads and executes a program that implements each function of the vehicle controller 120 in memory, thereby realizing each function performed by the vehicle controller 120.

The processing performed by the vehicle controller 120 described above operates the work machine by executing a program recorded in memory by the processor, using power from the grid power supply 400 and the high voltage battery 112. Therefore, the aforementioned processing can be regarded as an electric power control method that sets the power received from the grid power supply 400 based on signals output by the server 500, which is an external device.

It should be noted that the program for realizing this embodiment can be provided not only through communication means but also stored and provided on a recording medium such as a CD-ROM.

The embodiment described above has been explained, but the technical scope of the present invention is not limited to the scope described in the above embodiment. It is apparent from the description of the claims that various changes or improvements made to the above embodiment are also included in the technical scope of the present invention.

Description of Reference Characters

1: Electric power control system, 14, 16, 17: Hydraulic cylinder (work device), 100: Electric excavator (work machine, self-device), 110: High voltage circuit, 111: AC/DC converter (power receiving device), 112: High voltage storage battery (battery), 120: Vehicle controller, 121: Control calculation function unit (processor), 122: Data recording unit (memory), 125: First data transmission/reception unit (first data communication device), 130: Hydraulic circuit, 200:, 300: Reel-type cable container, 400: Grid power supply, 500: Server (external device, management device), 520: Controller, 530: Database

## Claims

**1.** A work machine comprising:

a vehicle body including a work device;
a power receiving device attached to the vehicle body to receive electric power from a grid power supply; and
a battery attached to the vehicle body, and
the work machine operates using electric power from the power receiving device and the battery, and
the work machine further comprises:
a first data communication device that receives information output by an external device; and
a vehicle controller that sets electric power received from the grid power supply based on the information received by the first data communication device.

**2.** The work machine according to claim 1,

wherein the first data communication device is configured to transmit consumption electric power information, which is electric power information consumed by the vehicle body, to the external device, and to receive new electric power information which is determined by the external device based on the consumption electric power information, and
the vehicle controller is configured to set electric power received from the grid power supply based on the new electric power information determined by the external device that received by the first data communication device.

**3.** The work machine according to claim 2,
wherein the first data communication device is configured to:

transmit key ON/OFF information of the vehicle body to the external device; and
receive the new electric power information determined by the external device based on consumption electric power information during a operation period of the vehicle body, which is determined from the consumption electric power information and the key ON/OFF information.

**4.** The work machine according to claim 2,
wherein the first data communication device is configured to transmit battery remaining information, which is information of remaining amount of the battery, to the external device, and to receive the new electric power information determined by the external device based on the consumption electric power information and the battery remaining information.

**5.** An electric power control method comprising:
by a processor configured to execute a program recorded in memory, setting electric power received from a grid power supply for a work machine that operates using electric power from the grid power supply and a battery, based on signals output by an external device.

**6.** An electric power control system comprising:

a management device that determines a plurality of distribution electric powers, from electric power received from a grid power supply, for distribute to respective of a plurality of work machines based on total consumption electric power during operation of the plurality of the work machines, the each work machine being operated by electric power from the grid power supply and a battery; and
a vehicle controller mounted on the each work machine and configured to set electric power, received by the work machine from the grid power supply, to the distribution electric power determined by the management device.

**7.** The electric power control system according to claim 6,
wherein the management device is configured to:

receive a plurality of consumption electric power information, which is information of electric power consumed by respective vehicle bodies of the plurality of work machines, and a contract electric power value, which is electric power obtainable from the grid power supply;
determine the total consumption electric power based on the plurality of consumption electric power information;
determine a plurality of distribution electric powers for distribute to respective of the plurality of the work machine, based on the total consumption electric power, the plurality of consumption electric power information, and the contract electric power value such that the total of the plurality of distribution electric powers does not exceed the contract electric power value; and
transmit information of the determined plurality of distribution electric powers to respective of the plurality of work machines.

**Amended claims under Art. 19.1 PCT**

**1.** A work machine comprising:

a vehicle body including a work device;
a power receiving device attached to the vehicle body to receive electric power from a grid power supply; and a battery attached to the vehicle body, and
the work machine operates using electric power from the power receiving device and the battery, and
the work machine further comprises:
a first data communication device that receives information output by an external device; and
a vehicle controller that sets electric power received from the grid power supply based on the information received by the first data communication device.

**2.** The work machine according to claim 1,

wherein the first data communication device is configured to transmit consumption electric power information, which is electric power information consumed by the vehicle body, to the external device, and to receive new electric power information which is determined by the external device based on the consumption electric power information, and
the vehicle controller is configured to set electric power received from the grid power supply based on the new electric power information determined by the external device that received by the first data communication device.

**3.** The work machine according to claim 2,
wherein the first data communication device is configured to:

transmit key ON/OFF information of the vehicle body to the external device; and
receive the new electric power information determined by the external device based on consumption electric power information during a operation period of the vehicle body, which is determined from the consumption electric power information and the key ON/OFF information.

**4.** The work machine according to claim 2,
wherein the first data communication device is configured to transmit battery remaining information, which is information of remaining amount of the battery, to the external device, and to receive the new electric power information determined by the external device based on the consumption electric power information and the battery remaining information.

**5.** (Deleted)

**6.** An electric power control system comprising:

a management device that determines a plurality of distribution electric powers, from electric power received from a grid power supply, for distribute to respective of a plurality of work machines based on total consumption electric power during operation of the plurality of the work machines, the each work machine being operated by electric power from the grid power supply and a battery; and

a vehicle controller mounted on the each work machine and configured to set electric power, received by the work machine from the grid power supply, to the distribution electric power determined by the management device.

**7.** The electric power control system according to claim 6, wherein the management device is configured to:

receive a plurality of consumption electric power information, which is information of electric power consumed by respective vehicle bodies of the plurality of work machines, and a contract electric power value, which is electric power obtainable from the grid power supply;

determine the total consumption electric power based on the plurality of consumption electric power information;

determine a plurality of distribution electric powers for distribute to respective of the plurality of the work machine, based on the total consumption electric power, the plurality of consumption electric power information, and the contract electric power value such that the total of the plurality of distribution electric powers does not exceed the contract electric power value; and

transmit information of the determined plurality of distribution electric powers to respective of the plurality of work machines.

FIG. 1

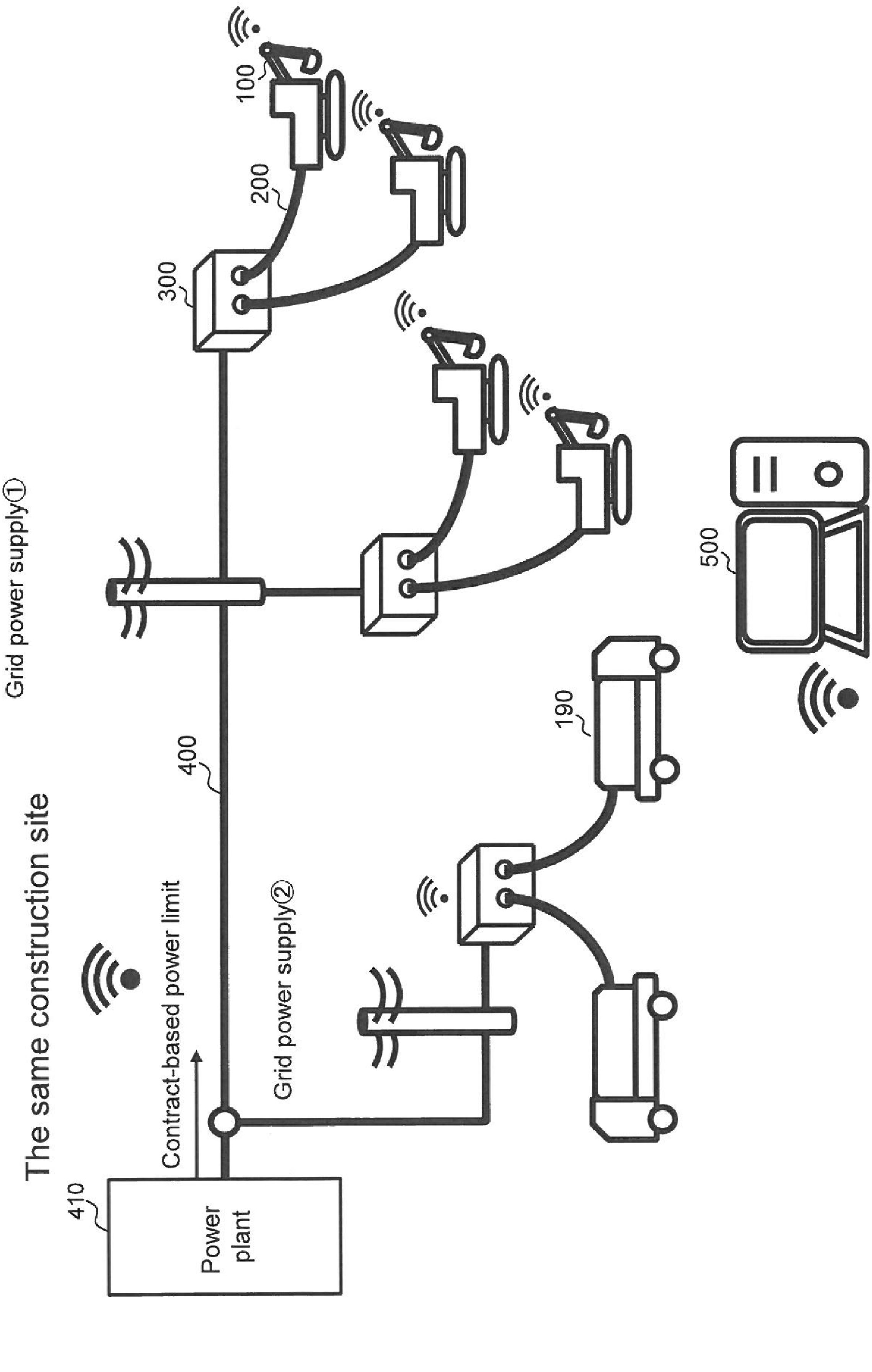
The same construction site
Grid power supply①
Grid power supply②
Contract-based power limit
Power plant
410
400
300
200
100
190
500

FIG. 2

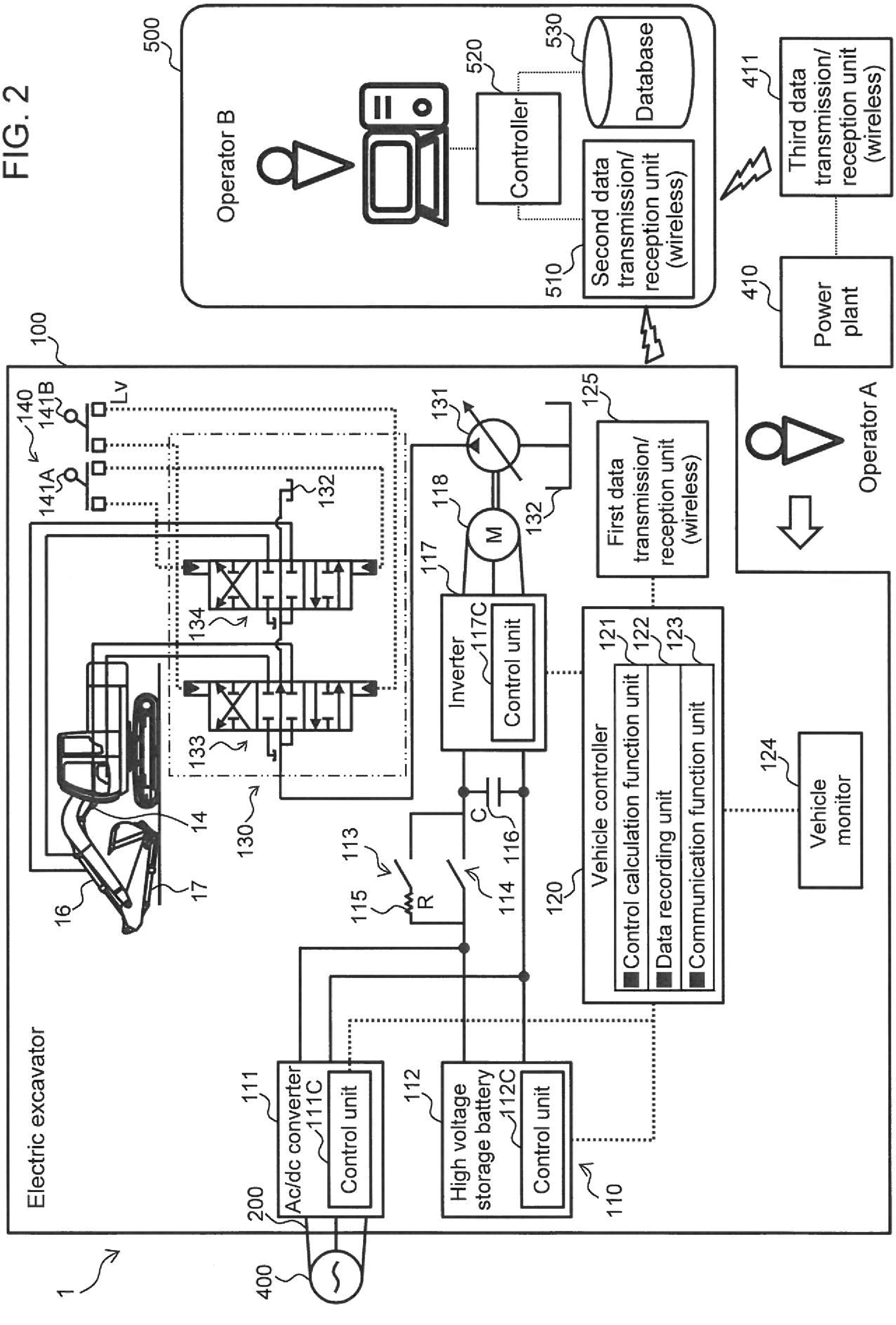

Electric excavator
1
100
110
111
Ac/dc converter
111C
Control unit
112
High voltage storage battery
112C
Control unit
113
114
115
R
116
C
117
Inverter
117C
Control unit
118
M
120
Vehicle controller
121
122
123
Control calculation function unit
Data recording unit
Communication function unit
124
Vehicle monitor
125
First data transmission/ reception unit (wireless)
130
131
132
133
134
14
16
17
140
141A
141B
Lv
200
400
410
Power plant
411
Third data transmission/ reception unit (wireless)
500
Operator A
Operator B
510
Second data transmission/ reception unit (wireless)
520
Controller
530
Database

FIG. 3

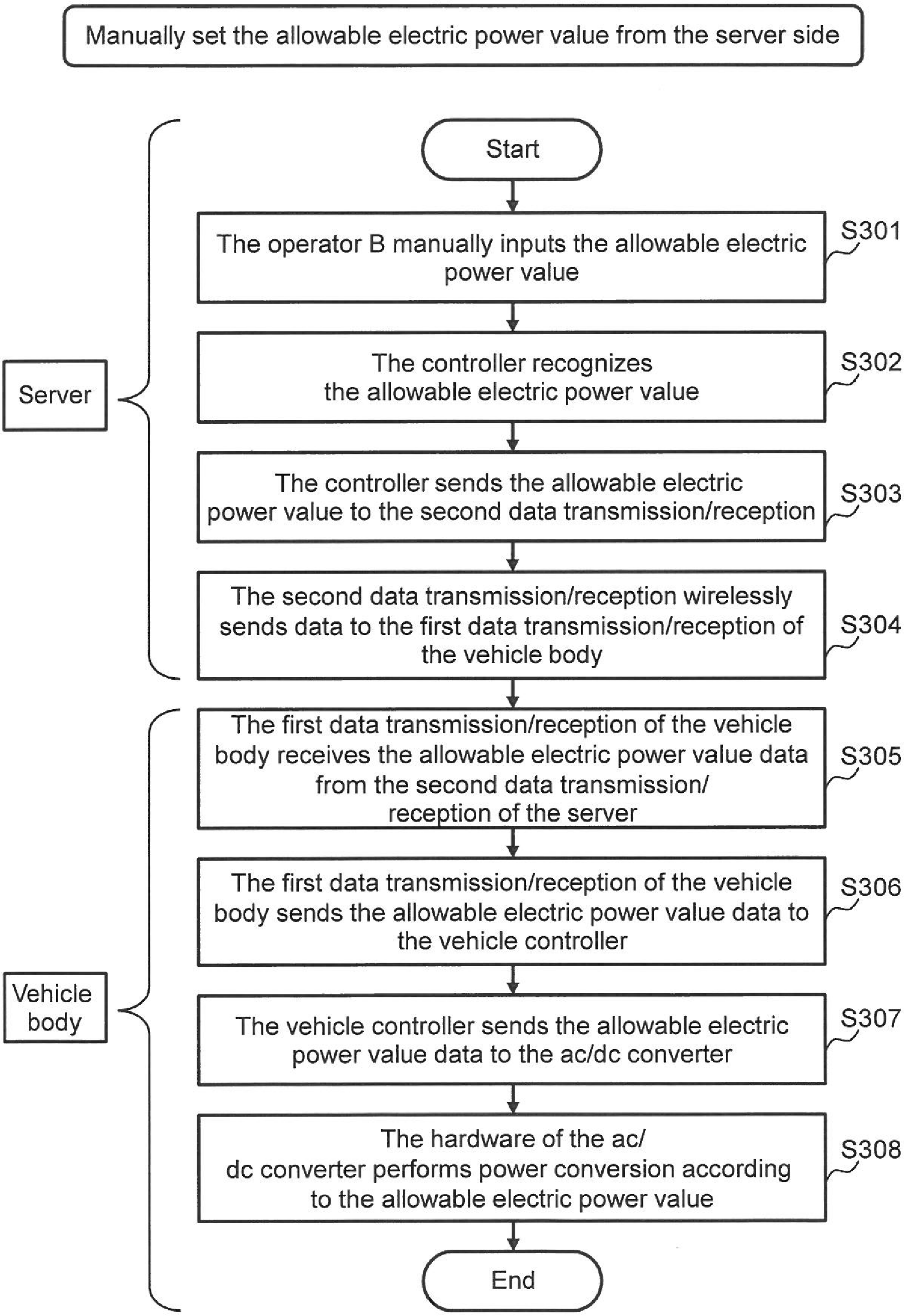
Manually set the allowable electric power value from the server side
Server
Vehicle body
Start
The operator B manually inputs the allowable electric power value
S301
The controller recognizes the allowable electric power value
S302
The controller sends the allowable electric power value to the second data transmission/reception
S303
The second data transmission/reception wirelessly sends data to the first data transmission/reception of the vehicle body
S304
The first data transmission/reception of the vehicle body receives the allowable electric power value data from the second data transmission/ reception of the server
S305
The first data transmission/reception of the vehicle body sends the allowable electric power value data to the vehicle controller
S306
The vehicle controller sends the allowable electric power value data to the ac/dc converter
S307
The hardware of the ac/ dc converter performs power conversion according to the allowable electric power value
S308
End

FIG. 4

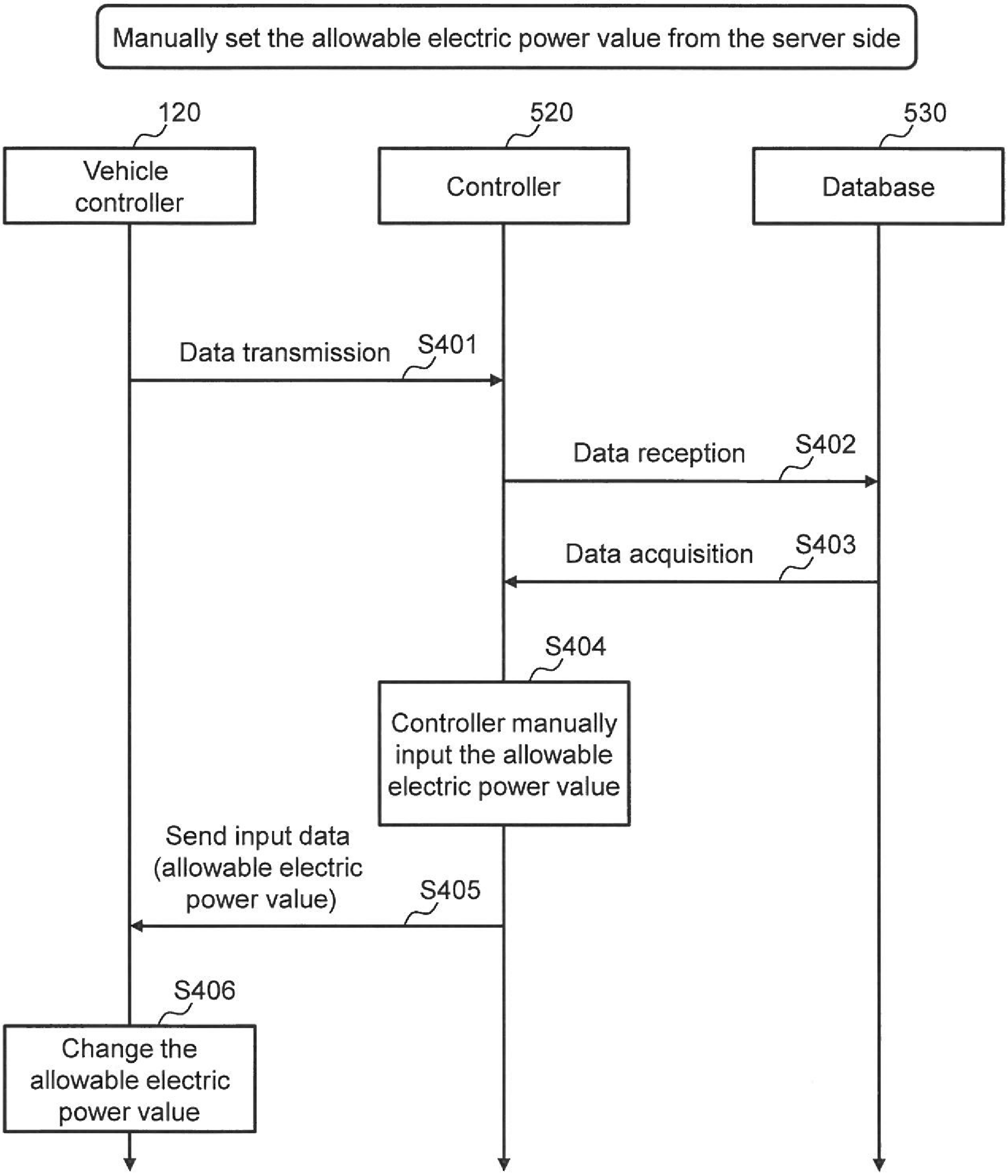
Manually set the allowable electric power value from the server side
120
Vehicle controller
520
Controller
530
Database
Data transmission
S401
Data reception
S402
Data acquisition
S403
S404
Controller manually input the allowable electric power value
Send input data (allowable electric power value)
S405
S406
Change the allowable electric power value

FIG. 5

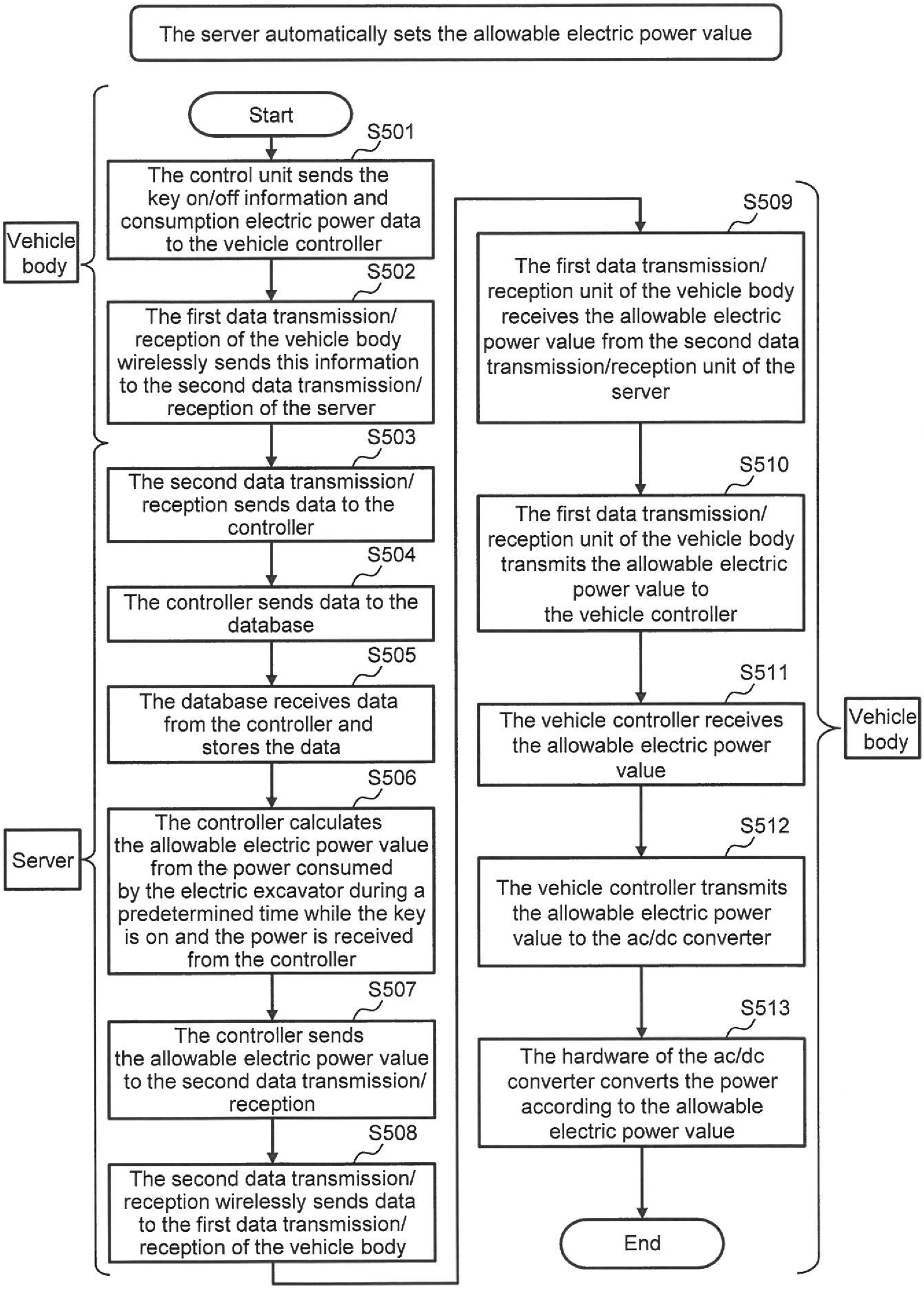
The server automatically sets the allowable electric power value
Start
S501
The control unit sends the key on/off information and consumption electric power data to the vehicle controller
S502
The first data transmission/reception of the vehicle body wirelessly sends this information to the second data transmission/reception of the server
S503
The second data transmission/reception sends data to the controller
S504
The controller sends data to the database
S505
The database receives data from the controller and stores the data
S506
The controller calculates the allowable electric power value from the power consumed by the electric excavator during a predetermined time while the key is on and the power is received from the controller
S507
The controller sends the allowable electric power value to the second data transmission/reception
S508
The second data transmission/reception wirelessly sends data to the first data transmission/reception of the vehicle body
S509
The first data transmission/reception unit of the vehicle body receives the allowable electric power value from the second data transmission/reception unit of the server
S510
The first data transmission/reception unit of the vehicle body transmits the allowable electric power value to the vehicle controller
S511
The vehicle controller receives the allowable electric power value
S512
The vehicle controller transmits the allowable electric power value to the ac/dc converter
S513
The hardware of the ac/dc converter converts the power according to the allowable electric power value
End
Vehicle body
Server
Vehicle body

FIG. 6

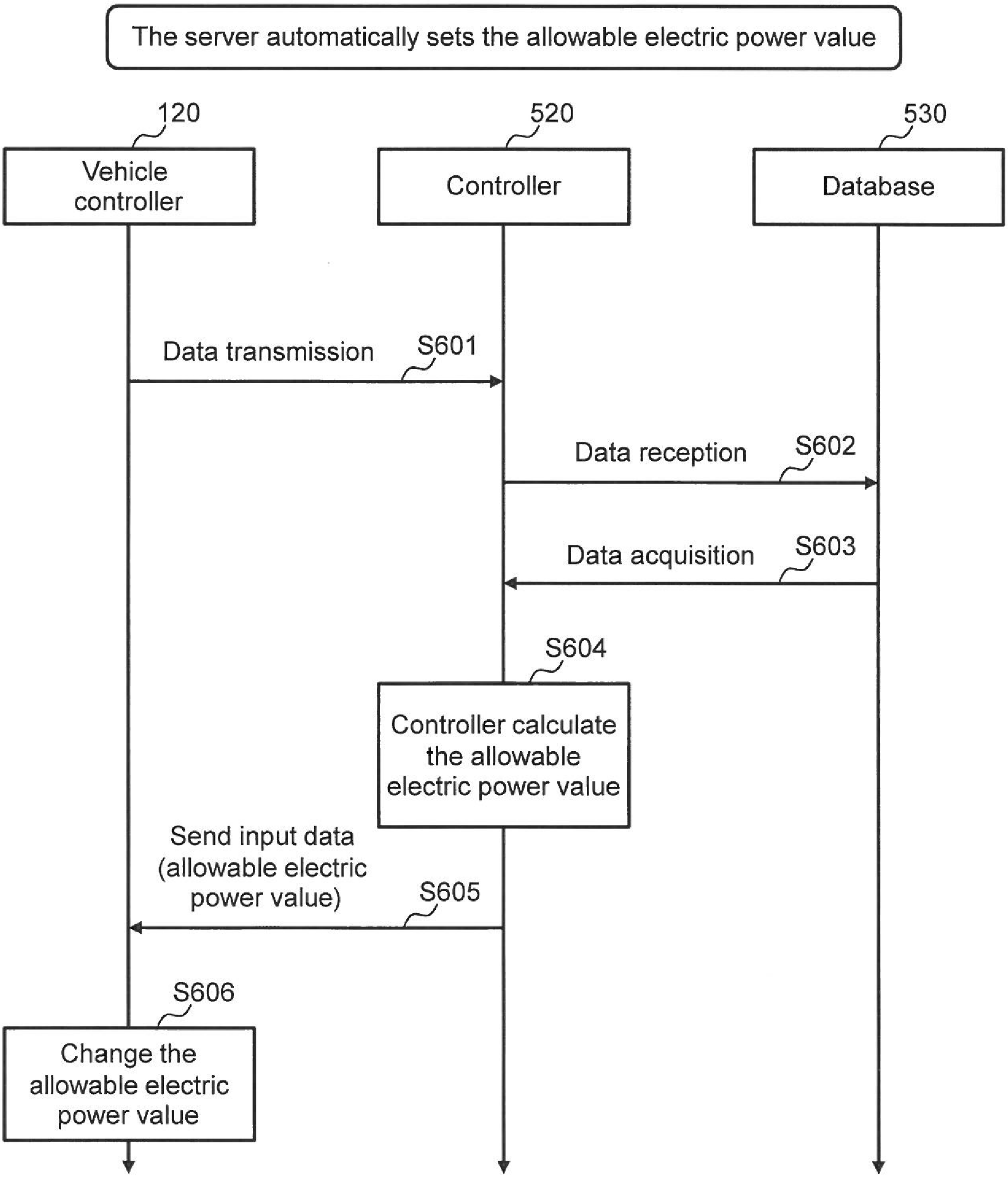
The server automatically sets the allowable electric power value
120
Vehicle controller
520
Controller
530
Database
Data transmission
S601
Data reception
S602
Data acquisition
S603
S604
Controller calculate the allowable electric power value
Send input data (allowable electric power value)
S605
S606
Change the allowable electric power value

FIG. 7

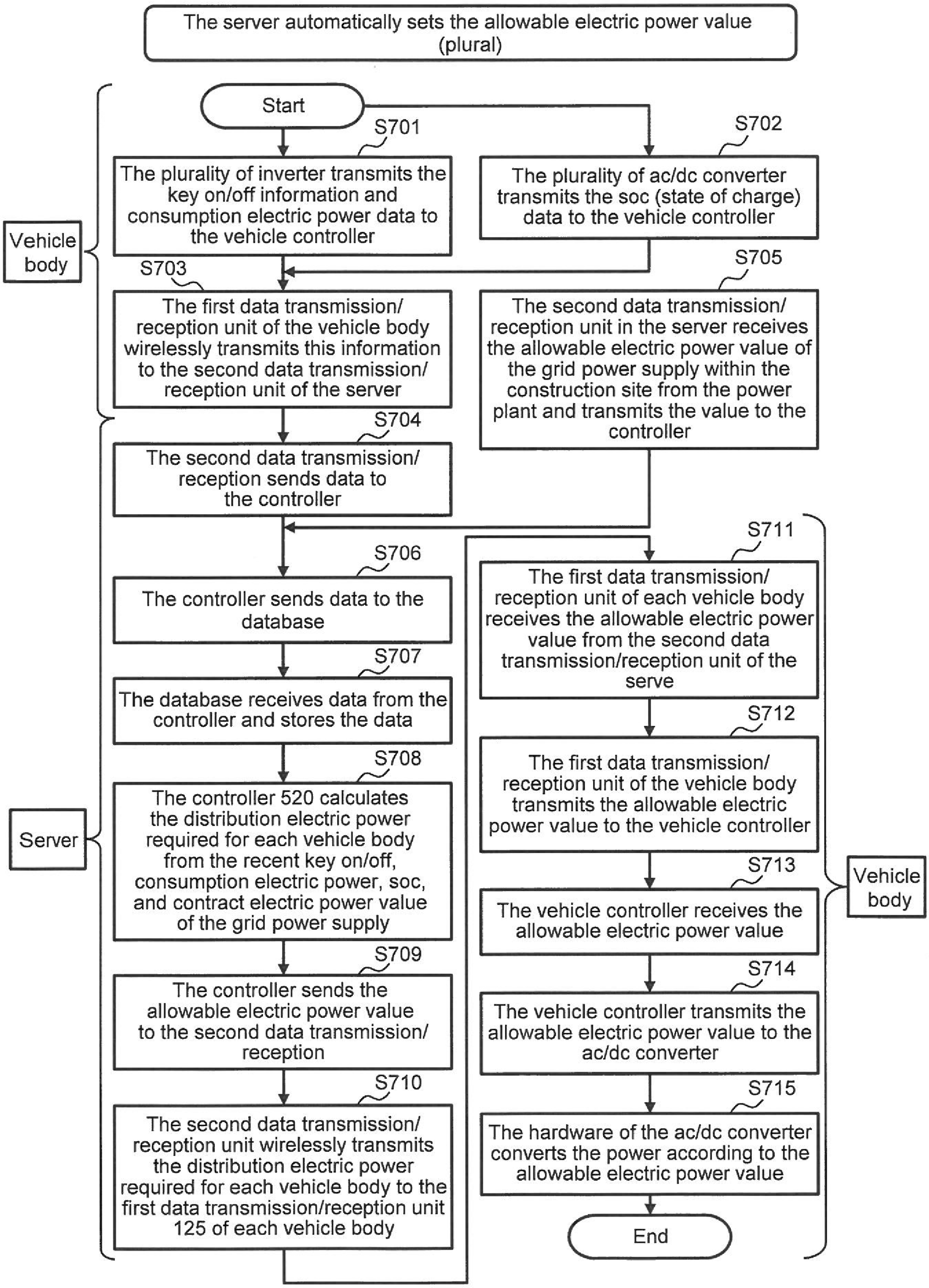
The server automatically sets the allowable electric power value (plural)
Vehicle body
Start
S701
The plurality of inverter transmits the key on/off information and consumption electric power data to the vehicle controller
S702
The plurality of ac/dc converter transmits the soc (state of charge) data to the vehicle controller
S703
The first data transmission/ reception unit of the vehicle body wirelessly transmits this information to the second data transmission/ reception unit of the server
S705
The second data transmission/ reception unit in the server receives the allowable electric power value of the grid power supply within the construction site from the power plant and transmits the value to the controller
S704
The second data transmission/ reception sends data to the controller
S706
The controller sends data to the database
S707
The database receives data from the controller and stores the data
S708
The controller 520 calculates the distribution electric power required for each vehicle body from the recent key on/off, consumption electric power, soc, and contract electric power value of the grid power supply
S709
The controller sends the allowable electric power value to the second data transmission/ reception
S710
The second data transmission/ reception unit wirelessly transmits the distribution electric power required for each vehicle body to the first data transmission/reception unit 125 of each vehicle body
Server
S711
The first data transmission/ reception unit of each vehicle body receives the allowable electric power value from the second data transmission/reception unit of the serve
S712
The first data transmission/ reception unit of the vehicle body transmits the allowable electric power value to the vehicle controller
S713
The vehicle controller receives the allowable electric power value
S714
The vehicle controller transmits the allowable electric power value to the ac/dc converter
S715
The hardware of the ac/dc converter converts the power according to the allowable electric power value
End
Vehicle body

FIG. 8

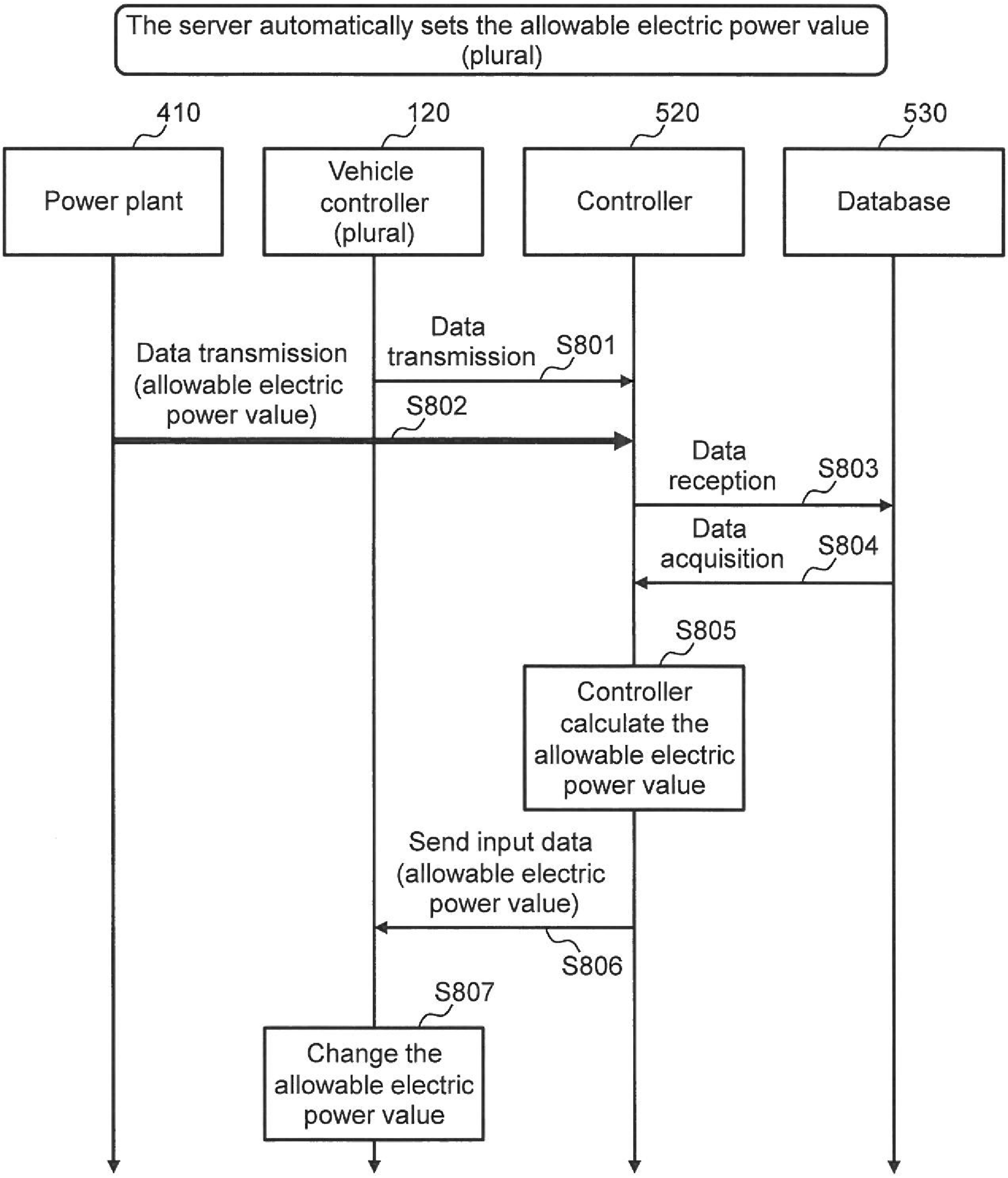
The server automatically sets the allowable electric power value (plural)
410
120
520
530
Power plant
Vehicle controller (plural)
Controller
Database
Data transmission
S801
Data transmission (allowable electric power value)
S802
Data reception
S803
Data acquisition
S804
S805
Controller calculate the allowable electric power value
Send input data (allowable electric power value)
S806
S807
Change the allowable electric power value

FIG. 9

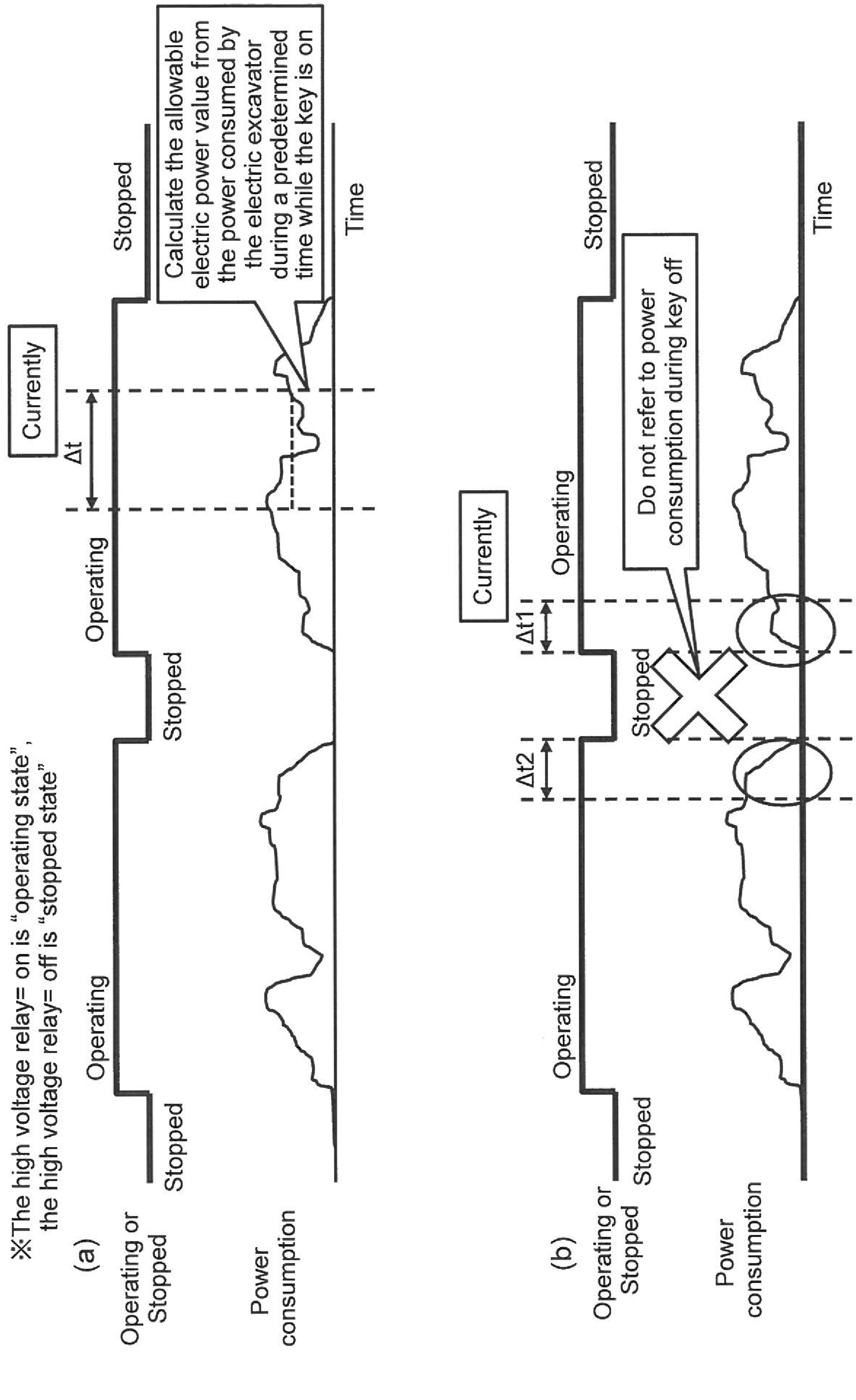
※The high voltage relay= on is "operating state", the high voltage relay= off is "stopped state"
(a)
Operating or Stopped
Power consumption
Stopped
Operating
Stopped
Operating
Stopped
Currently
Δt
Calculate the allowable electric power value from the power consumed by the electric excavator during a predetermined time while the key is on
Time
(b)
Operating or Stopped
Power consumption
Stopped
Operating
Δt2
Stopped
Δt1
Currently
Operating
Do not refer to power consumption during key off
Stopped
Time

FIG. 10

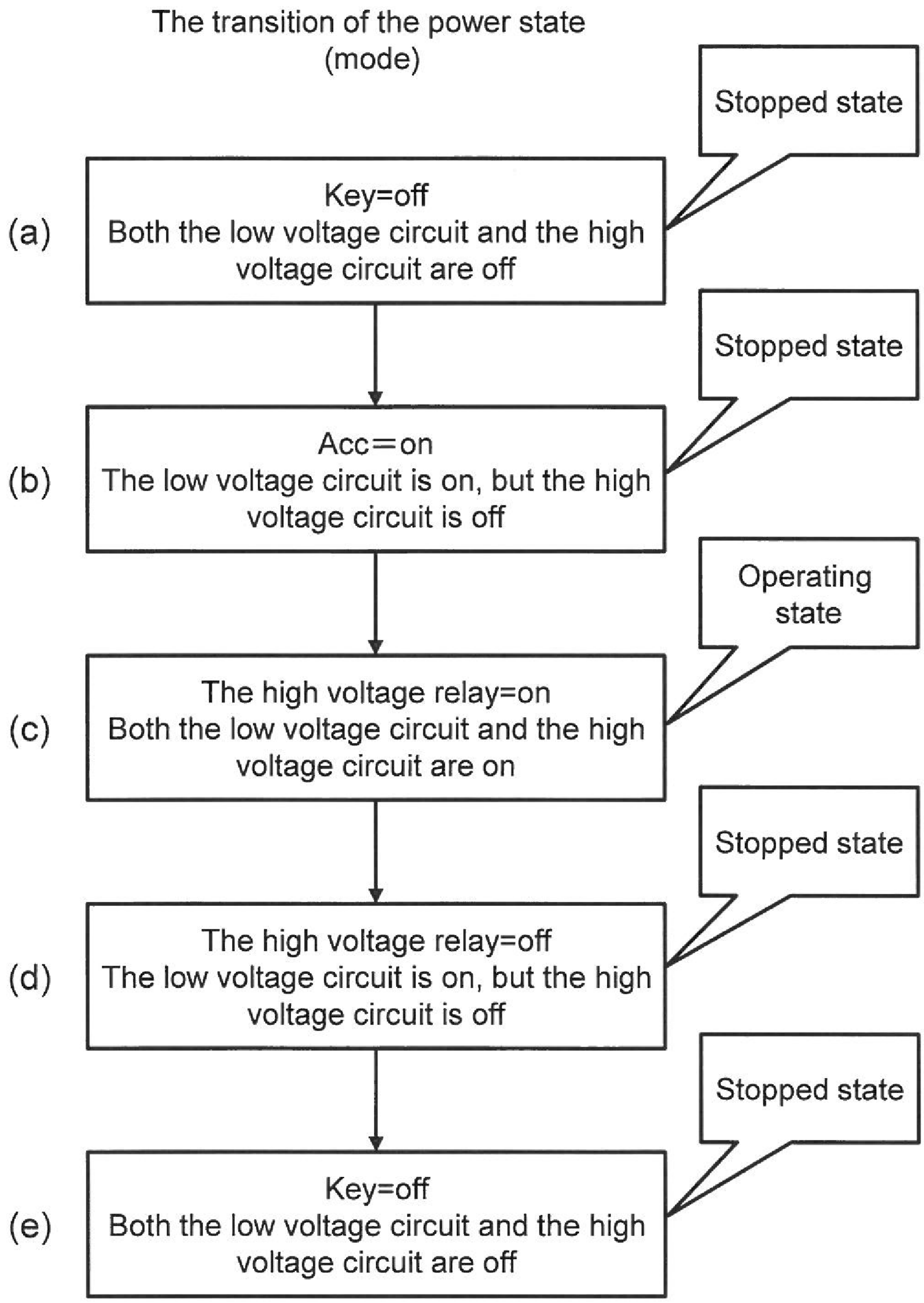
The transition of the power state
(mode)
Stopped state
(a)
Key=off
Both the low voltage circuit and the high voltage circuit are off
Stopped state
(b)
Acc=on
The low voltage circuit is on, but the high voltage circuit is off
Operating state
(c)
The high voltage relay=on
Both the low voltage circuit and the high voltage circuit are on
Stopped state
(d)
The high voltage relay=off
The low voltage circuit is on, but the high voltage circuit is off
Stopped state
(e)
Key=off
Both the low voltage circuit and the high voltage circuit are off

FIG. 11

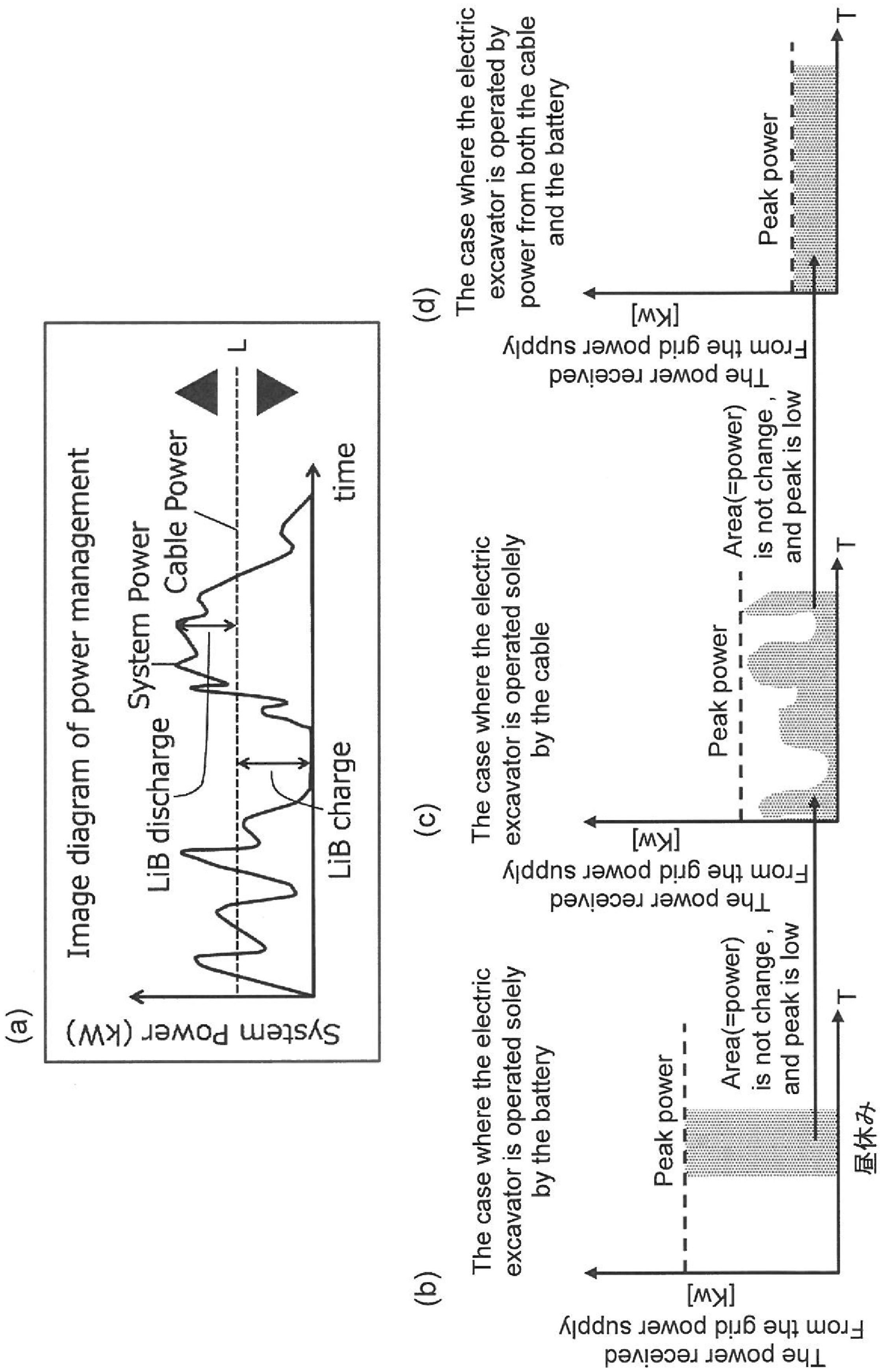
(a)
Image diagram of power management
System Power (kW)
LiB discharge
System Power
Cable Power
LiB charge
L
time
(b)
The case where the electric excavator is operated solely by the battery
The power received From the grid power supply [Kw]
Peak power
Area(=power) is not change , and peak is low
昼休み
T
(c)
The case where the electric excavator is operated solely by the cable
The power received From the grid power supply [Kw]
Peak power
Area(=power) is not change , and peak is low
T
(d)
The case where the electric excavator is operated by power from both the cable and the battery
The power received From the grid power supply [Kw]
Peak power
T

FIG. 12

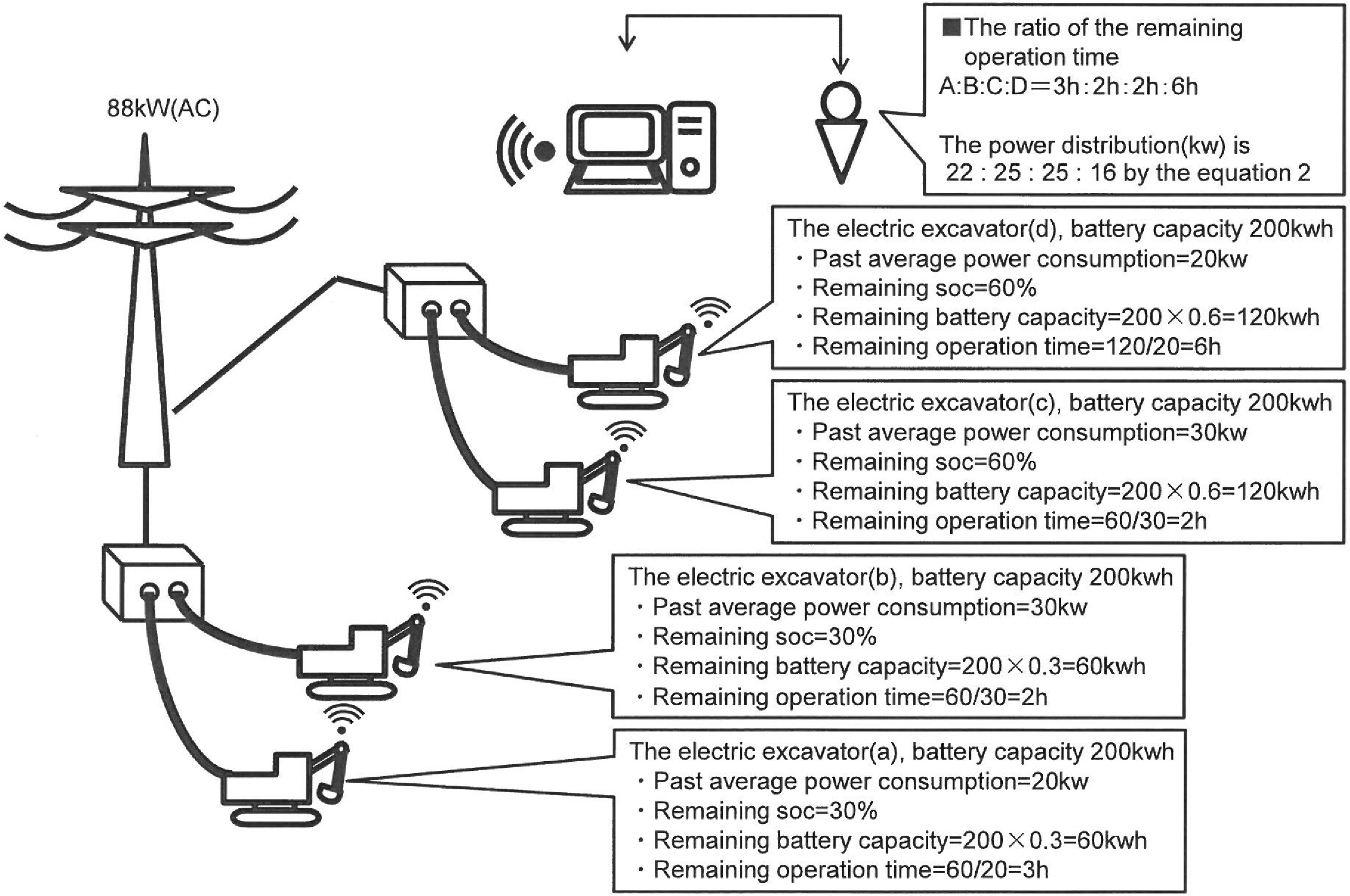
88kW(AC)
■The ratio of the remaining operation time
A:B:C:D＝3h:2h:2h:6h
The power distribution(kw) is
22 : 25 : 25 : 16 by the equation 2
The electric excavator(d), battery capacity 200kwh
・Past average power consumption=20kw
・Remaining soc=60%
・Remaining battery capacity=200×0.6=120kwh
・Remaining operation time=120/20=6h
The electric excavator(c), battery capacity 200kwh
・Past average power consumption=30kw
・Remaining soc=60%
・Remaining battery capacity=200×0.6=120kwh
・Remaining operation time=60/30=2h
The electric excavator(b), battery capacity 200kwh
・Past average power consumption=30kw
・Remaining soc=30%
・Remaining battery capacity=200×0.3=60kwh
・Remaining operation time=60/30=2h
The electric excavator(a), battery capacity 200kwh
・Past average power consumption=20kw
・Remaining soc=30%
・Remaining battery capacity=200×0.3=60kwh
・Remaining operation time=60/20=3h

## INTERNATIONAL SEARCH REPORT

International application No.
**PCT/JP2024/033879**

**A. CLASSIFICATION OF SUBJECT MATTER**

***H02J 3/14***(2006.01)i; ***E02F 9/00***(2006.01)i; ***H02J 3/32***(2006.01)i; ***H02J 13/00***(2006.01)i
FI: H02J3/14; H02J3/32; H02J13/00 311T; E02F9/00 C

According to International Patent Classification (IPC) or to both national classification and IPC

**B. FIELDS SEARCHED**

Minimum documentation searched (classification system followed by classification symbols)

H02J3/14; E02F9/00; H02J3/32; H02J13/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2022/172044 A1 (NISSAN MOTOR CO., LTD., RENAULT S.A.S.) 18 August 2022 (2022-08-18) paragraphs [0010]-[0079], fig. 1-6 | 5 |
| A | paragraphs [0010]-[0079], fig. 1-6 | 1-4, 6-7 |
| X | JP 2022-122537 A (NISSAN MOTOR CO., LTD., RENAULT S.A.S.) 23 August 2022 (2022-08-23) paragraphs [0010]-[0091], fig. 1-6 | 5 |
| A | paragraphs [0010]-[0091], fig. 1-6 | 1-4, 6-7 |
| A | JP 2023-7920 A (TOYOTA JIDOSHA KABUSHIKI KAISHA) 19 January 2023 (2023-01-19) paragraphs [0022]-[0120], fig. 1-7 | 1-4, 6-7 |
| A | WO 2022/153735 A1 (YANMAR HOLDINGS CO., LTD.) 21 July 2022 (2022-07-21) paragraphs [0011]-[0070], fig. 1-10 | 1-4, 6-7 |

☐ Further documents are listed in the continuation of Box C.
☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 November 2024** | **03 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/033879**

| Patent document cited in search report | Publication date (day/month/year) | Patent family member(s) | Publication date (day/month/year) |
|---|---|---|---|
| WO 2022/172044 A1 | 18 August 2022 | US 2024/0097467 A1<br>paragraphs [0015]-[0090], fig. 1-6<br>EP 4293605 A1<br>CN 116745796 A | |
| JP 2022-122537 A | 23 August 2022 | (Family: none) | |
| JP 2023-7920 A | 19 January 2023 | US 2023/0004132 A1<br>paragraphs [0031]-[0129], fig. 1-7 | |
| WO 2022/153735 A1 | 21 July 2022 | US 2024/0051405 A1<br>paragraphs [0025]-[0084], fig. 1-10<br>CN 116806281 A<br>KR 10-2023-0129977 A<br>EP 4279661 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2020039239 A